# EUROPEAN PATENT APPLICATION

(11) **EP 4 550 501 A2**
(43) Date of publication of application: **07.05.2025**
(21) Application number: 24209722.8
(22) Date of filing: 30.10.2024
(51) Int. Cl.: H01M 10/04, H01M 10/0585, H01M 50/514

(54) **LUG ALIGNMENT APPARATUS AND METHOD**

(30) Priority: 30.10.2023 GB 202316573
(71) Applicant: TBS Engineering Limited, Brockworth, Gloucester GL3 4AQ (GB)
(72) Inventor: Ryland, Stuart, Gloucester (GB)
(74) Representative: Wynne-Jones IP Limited

(57) **Abstract**

Apparatus and method for aligning the lugs on a stack of battery plates in a jig box. The apparatus comprises a frame carrying a lug alignment mechanism for positioning over the jig box. The frame comprises a set of feet that engage on opposite first and second sides of the jig box to locate the lug alignment mechanism in a predetermined position relative to the jig box. The frame feet on one side comprise fixed surfaces configured to engage contact surfaces on a first side of the jig box. The frame feet on the opposite side comprise actuators with moveable surfaces for engaging contact surfaces on the corresponding second side of the jig box. The actuators are operable such that when the frame is positioned over the jig box with the frame feet adjacent to the contact surfaces, the moveable surfaces are moveable between a first position in which they are spaced from the contact surfaces on the second side of the jig box, and a second position in which they are engaged with the contact surfaces on the second side of the jig box and the fixed surfaces are engaged with the contact surfaces on the first side of the jig box. The alignment mechanism is operable to align the lugs when the fixed and moveable surfaces on the frame feet are engaged with the contact surfaces.

## Description

### Technical Field

This invention relates to an apparatus for aligning the lugs on battery plates for use in a process for manufacturing electrical batteries.

### Background

In the production of batteries, alternating positive and negative plates are connected to each other by lugs projecting from edges of the plates. The connection is produced by clamping a series of plates in a jig box with the lugs aligned, and inverting the jig box over a mould which is filled with molten lead and the lugs are dipped into the filled mould and the lead allowed to solidify and provide the electrical connection between the plates.

When the plates are loaded into the jig box, it is possible that the lugs are not fully aligned. If this occurs, they may not fit into the mould properly. This can cause damage to the lugs or require that the manufacturing process be halted to remove the badly aligned plates.

In an attempt to reduce this problem, it has been proposed to use an alignment mechanism to force the lugs into alignment. The plates are loaded into the jig box with the lugs pointing upwards and nominally aligned. A frame is lowered onto the jig box and located by means of feet which engage against hardened plates on the sides of the jig box. Once the frame is in place, actuators mounted on the fame act on the lugs to move the plates so that the lugs are more accurately aligned.

There must be sufficient clearance to allow the feet to be place onto and removed from the jig box without jamming. Also, repeated contact between the feet and the sides of the jig box can lead to wear of the feet. These factors mean that there is always a degree of play in the system which in turn leads to less accurate alignment of the lugs. The potential for inaccurate alignment of the lugs has to be accommodated in the design of the mould.

This invention aims to provide an apparatus that can improve accuracy of alignment of the lugs.

### Summary

A first aspect of this invention comprises apparatus for aligning the lugs on a stack of battery plates in a jig box, comprising a frame carrying a lug alignment mechanism for positioning over the jig box, wherein the frame comprises: a set of feet that engage on opposite first and second sides of the jig box to locate the lug alignment mechanism in a predetermined position relative to the jig box; wherein the frame feet on one side comprise fixed surfaces configured to engage contact surfaces on a corresponding first side of the jig box; the frame feet on the opposite side comprise actuators with moveable surfaces for engaging contact surfaces on the corresponding second side of the jig box; and the actuators are operable such that when the frame is positioned over the jig box with the frame feet adjacent to the contact surfaces, the moveable surfaces are moveable between a first position in which the moveable surfaces are spaced from the contact surfaces on the second side of the jig box, and a second position in which the moveable surfaces are engaged with the contact surfaces on the second side of the jig box and the fixed surfaces are engaged with the contact surfaces on the first side of the jig box; and the alignment mechanism is operable to align the lugs when the fixed and moveable surfaces on the frame feet are engaged with the contact surfaces on the jig box.

Positioning the actuator to the first position increases the space between the fixed and moveable surfaces, reducing the likelihood of contact between these surfaces and the jig box when the frame is being lowered onto the jig box, thus reducing wear. Positioning the actuator to the second position avoids any residual clearance between the surfaces, leading to more accurate positioning.

The actuators can be configured to urge the moveable surface against the contact surface on the second side of the jig box and draw the fixed feet into engagement with the contact surface on the first side of the jig box. This is less likely to cause wear than sliding feet with a fixed spacing over the jig box.

The alignment mechanism can comprise actuators mounted on the frame and configured to act on opposite edges of the lugs to urge the lugs into alignment.

The frame feet can also comprise stop surfaces which are engageable with upper edges of the sides of the jig box to determine the position of the alignment mechanism above the jig box.

A second aspect of this invention comprises a method of aligning the lugs on a stack of battery plates in a jig box using the apparatus, comprising positioning the apparatus above the jig box; operating the frame feet actuators such that the moveable surfaces are in the first position; lowering the apparatus until the frame feet are adjacent to the contact surfaces on the jig box; operating the frame feet actuators such that the moveable surfaces are in the second position and the moveable surfaces are engaged with the contact surfaces on the second side of the jig box and the fixed surfaces are engaged with the contact surfaces on the first side of the jig box; and operating the alignment mechanism to align the lugs on the battery plates in the jig box.

Various aspects and embodiments of the invention are disclosed below.

### Brief Description of Drawings

Figure 1 shows a stack of battery plates.
Figure 2 shows an end view of jig box and a strap mould.
Figure 3 shows an end view of an alignment apparatus mounted on a jig box.
Figure 4 shows detail of areas A and B of Figure 3 in a first configuration.
Figure 5 shows detail of areas A and B of Figure 3 in a second configuration.
Figure 6 shows a partial end view of a known alignment apparatus.
Figure 7 detail of areas C and D of Figure 6.

### Detailed Description

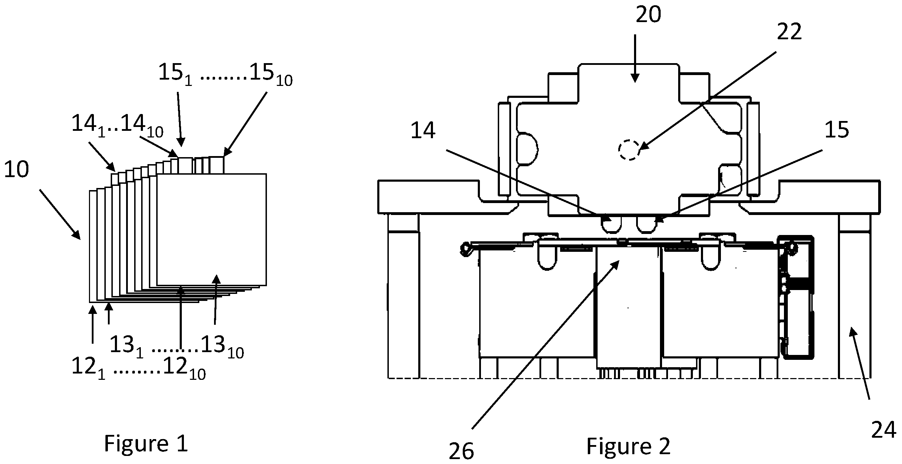

Figure 1 shows a stack of battery plates used in the production of lead-acid batteries. The stack 10 comprises alternating positive plates 12₁ ... 12₁₀ and negative plates 13₁ ... 13₁₀ separated by a porous separating material (not shown) for holding electrolyte. While ten square plates are shown here, the stack can comprise plates of any appropriate shape and number Each plate 12₁ ... 12₁₀,13₁... 13₁₀ has a respective lug 14₁ ... 14₁₀,15₁... 15₁₀ to allow the plates of the same type to be connected to each other.

Each stack of plates corresponds to a cell in the battery. To form the battery, stacks of plates are clamped in a jog box which holds the stacks in the configuration of the final battery and conducting straps are cast onto the lugs 14, 15. Figure 2 shows a system for casing the straps onto the lugs 14, 15. The stacks of plates are clamped in a jig box 20. The jig box 20 can be rotated about a horizontal axis 22 so that the stacks of plated can be inverted, as shown in Figure 2, with the lugs 14, 15 pointing downwards. The jog box 20 is supported by a support frame 24 which allows the lugs 14, 15 to be inserted into a mould 26 for casting the straps onto the lugs. The cavities (not shown) in the mould 26 have to be wide enough to accommodate the lugs 14, 15, including any misalignment or variation in alignment relative to the axis 22. In essence, the mould cavitied have to be oversized. This in turn means that the amount of lead cast onto the lugs is more than is strictly necessary to provide an appropriate electrical connection. Prior moulds are typically large enough to accommodate a 0.5 mm misalignment in the lugs 14, 15 due to the errors in the previous alignment systems. Over the life of a mould, this can lead to a significant waste of lead.

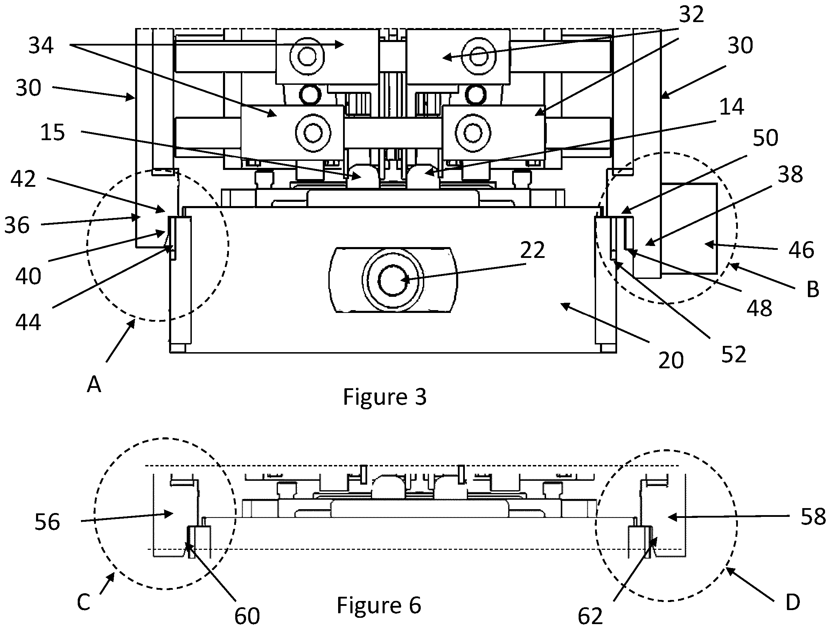

Figure 3 shows an end view of an alignment apparatus according to one embodiment of the invention positioned on a jig box 20. In this case, the jig box is rotated 180 degrees about the axis 22 compared to the position shown in Figure 1. In use, stacks of plates are loaded into the jig box 20 from above. The jig box 20 holds the stacks in the configuration to be used in the completed battery. Initially, the plates can be moved laterally with respect to each other. The lugs 14, 15 project from the top of the jig box 20. The alignment apparatus comprises a frame 30 that has a lug alignment mechanism in the form of actuators 32, 34 that are operable to act on the edges of the lugs 14, 15 to push them into alignment with each other, and into position relative to the jig box.

The frame 30 is positioned on the jig box 20 by means of sets of feet 36, 38 (only one of each set is shown) which sit on opposite sides of the jig box 20.

A first foot 36 comprises a fixed vertical surface 40 and a horizontal stop surface 42 that are configured to engage a contact surface 44 on the facing side of the jig box 20. The contact surface 44 is formed of a hardened insert that extends to the upper edge of the jig box 20.

A second foot comprises an actuator 46 having a moveable vertical surface 48 and a horizontal stop surface 50 configured to engage a contact surface 52 on the facing side of the jig box 20. As with the contact surface 44, the contact surface 52 is formed of a hardened insert that extends to the upper edge of the jig box 20.

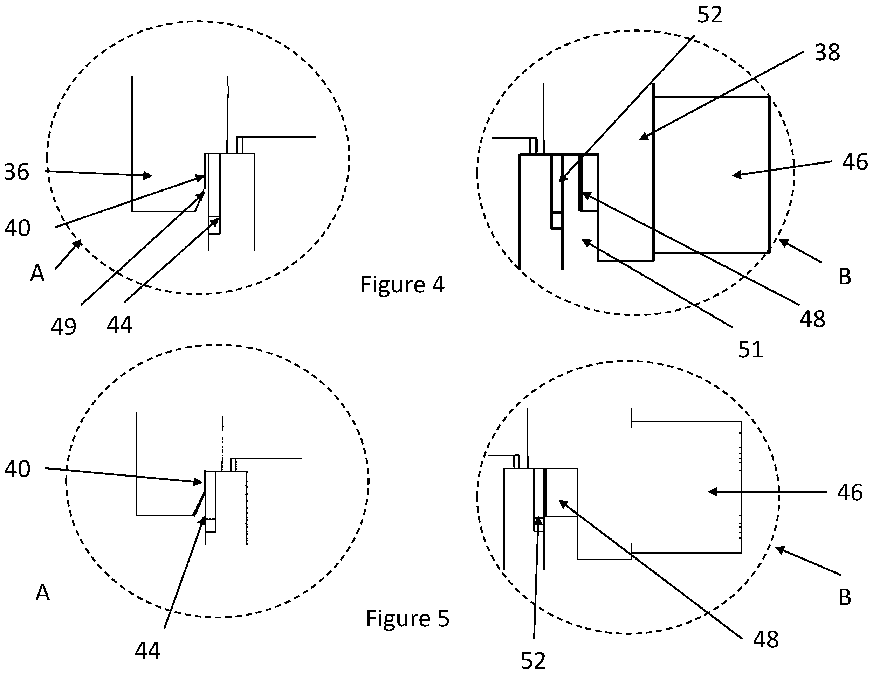

In use, the frame 30 is lowered over the jig box 20 until the stop surfaces 42, 50 engage the upper edges of the jig box 20. This defines the vertical position of the alignment mechanism with respect to the jig box 20. The fixed surface 40 and moveable surface 48 are in a first configuration shown in Figure 4, with the actuator 46 in a retracted position. With the actuator in the retracted position, there is a relatively large space between the fixed surface 40 and the moveable surface 48 so the feet 36, 38 cab be seated onto the edges of the jig box without the likelihood of contact between the fixed and movable surfaces 40, 48 and the respective contact surfaces 44, 52. When seated onto the jig box 20, there is a relatively small clearance 49 between the fixed surface 40 and the contact surface 44, and a relatively larger space between the moveable surface 48 and the contact surface 52.

Once the frame 30 is seated on the jig box 20, the actuator 46 can be operated to move the second configuration in which the moveable surface is urged against the contact surface 52 which has the effect of drawing the fixed surface 40 into contact with the contact surface 44. This provides lateral location of the frame 30 on the jig box 20. The alignment mechanism can then be operated to align the lugs 14, 15.

The use of the actuator means that horizontal clearance is taken up before the lugs are aligned, providing a relatively accurate lateral position of the frame 30 relative to the jig box. This in turn reduced the lateral uncertainly of the position of the lugs after alignment.

Once the lugs 14, 15 have been aligned, the plates are securely clamped in position in the jig box 20. The actuator 46 is then returned to the first configuration (Figure 4) and the frame 30 can be lifted off the jig box 20 so that the jig box can be inverted for positioning over the mould (Figure 2).

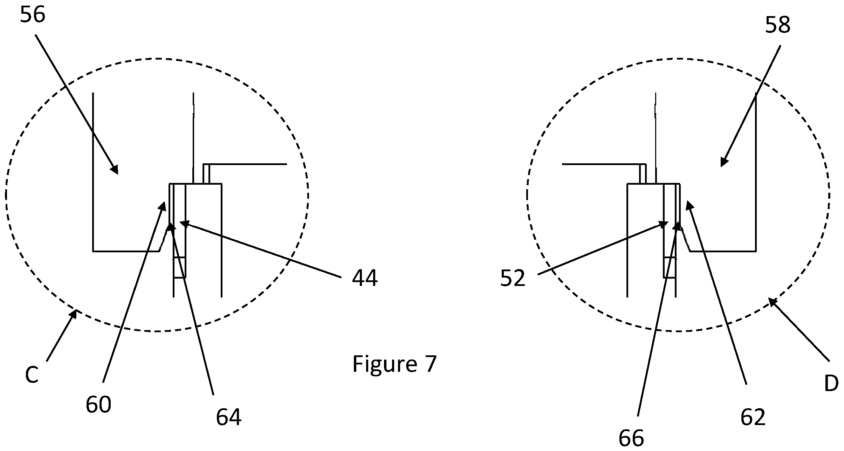

Figure 6 shows a comparative embodiment in which both feet 56, 58 comprise fixed surfaces 60, 62. In this case, it is necessary that there is a residual clearance 64, 66 on each side between the fixed surfaces 60, 62 and the respective contact surfaces 44, 52 (Figure 7). This clearance needs to be big enough to avoid jamming by interference yet small enough to allow alignment of the lugs once the frame is in pace. Because this clearance is relatively small, the feet will often contact the contact surfaces when the frame is being positioned on the jig box. This leads to wear of the fixed surfaces and increased uncertainty in lateral position.

Because the lateral alignment of the lugs with respect to the jig box can be more accurately controlled by use of the actuator, the width of the mould cavities can be smaller without risking the lugs contacting the sides of the mould cavities as they are inserted.

Further changes can be made within the scope of the invention. For example, the exact form of actuator can be selected according to requirements, as can the particular configuration of fixed, moveable, and contact surfaces.

## Claims

1. Apparatus for aligning the lugs on a stack of battery plates in a jig box, comprising:
a frame carrying a lug alignment mechanism for positioning over the jig box,
wherein the frame comprises:
a set of feet that engage on opposite first and second sides of the jig box to locate the lug alignment mechanism in a predetermined position relative to the jig box,
wherein:
the frame feet on one side comprise fixed surfaces configured to engage contact surfaces on a corresponding first side of the jig box,
the frame feet on the opposite side comprise actuators with moveable surfaces for engaging contact surfaces on the corresponding second side of the jig box, and
the actuators are operable such that when the frame is positioned over the jig box with the frame feet adjacent to the contact surfaces, the moveable surfaces are moveable between a first position in which the moveable surfaces are spaced from the contact surfaces on the second side of the jig box, and a second position in which the moveable surfaces are engaged with the contact surfaces on the second side of the jig box and the fixed surfaces are engaged with the contact surfaces on the first side of the jig box; and
the alignment mechanism is operable to align the lugs when the fixed and
moveable surfaces on the frame feet are engaged with the contact surfaces on the jig box.

2. Apparatus as claimed in claim 1, wherein the actuators are configured to urge the moveable surface against the contact surface on the second side of the jig box and draw the fixed feet into engagement with the contact surface on the first side of the jig box.

3. Apparatus as claimed in claim 1 or 2, wherein the alignment mechanism comprises actuators mounted on the frame and configured to act on opposite edges of the lugs to urge the lugs into alignment.

4. Apparatus as claimed in any preceding claim, wherein the frame feet comprise stop surfaces which are engageable with upper edges of the sides of the jig box to determine the position of the alignment mechanism above the jig box.

5. A method of aligning the lugs on a stack of battery plates in a jig box using the apparatus of any preceding claim, comprising:
positioning the apparatus above the jig box;
operating the frame feet actuators such that the moveable surfaces are in the first position;
lowering the apparatus until the frame feet are adjacent to the contact surfaces on the jig box;
operating the frame feet actuators such that the moveable surfaces are in the second position and the moveable surfaces are engaged with the contact surfaces on the second side of the jig box and the fixed surfaces are engaged with the contact surfaces on the first side of the jig box; and
operating the alignment mechanism to align the lugs on the battery plates in the jig box.
